# EUROPÄISCHE PATENTSCHRIFT

(11) **EP 1 493 218 B1**
(45) Veröffentlichungstag und Bekanntmachung des Hinweises auf die Patenterteilung: **31.08.2005**
(21) Anmeldenummer: 02795163.1
(22) Anmeldetag: 12.12.2002
(51) Int. Cl.: H02J 5/00, B60L 5/00

(54) **NOT-AUS-SYSTEM FÜR INDUKTIV VERSORGTE VERBRAUCHER**
EMERGENCY STOP SYSTEM FOR INDUCTIVELY SUPPLIED CONSUMERS
SYSTEME D'ARRET D'URGENCE POUR CONSOMMATEURS ALIMENTES PAR INDUCTION

(30) Priorität: 10.04.2002 DE 10215840
(43) Veröffentlichungstag der Anmeldung: 05.01.2005
(73) Patentinhaber: Paul Vahle GmbH & Co. KG, D-59174 Kamen (DE)
(72) Erfinder: REKER, Ulrich, 59063 Hamm (DE)
(74) Vertreter: Gerber, Wolfram
(86) Internationale Anmeldenummer: PCT/EP2002/014110
(87) Internationale Veröffentlichungsnummer: WO 2003/085799

(56) Entgegenhaltungen:
- EP-A- 1 011 187

## Beschreibung

Die vorliegende Erfindung betrifft eine Vorrichtung zur kontaktlosen Energieübertragung gemäß den Merkmalen des Oberbegriffs des Anspruch 1.

Bei Anlagen, bei denen die Energie- und Datenübertragung zum beweglichen Verbraucher über Schleifleitungen, Stromschienen, Schleppleitungen, etc. erfolgt, werden für die Energie- und Datenübertragung getrennte Kabel, Adern bzw. Stromschienen eingesetzt. Hierdurch ist es möglich, durch ein externes NOT-AUS-Signal den beweglichen Verbraucher stillzusetzen. Ober die separaten Adern bzw. Stromschienen für die Steuerung des Verbrauchers kann die Steuerung auch nach dem NOT-AUS in Betrieb bleiben. Das Stillsetzen des Antriebs des beweglichen Verbrauchers kann dabei durch Unterbrechung der Energieversorgung des Antriebs erfolgen. Es ist jedoch auch möglich, daß bei einer NOT-AUS-Situation das Steuersignal über die Datenleitungen für die Steuerung des beweglichen Verbrauchers diesem zugeleitet wird, woraufhin die Steuerung des Verbrauchers das NOT-Ausschalten durchführt.

Bei kontaktlosen induktiven Energieübertragungssystemen, wie sie z.B. aus der EP 1011187 sowie der DE 4438286 bekannt sind, erfolgt die Übertragung der Energie bei einer festen Frequenz. Sofern ein NOT-AUS bzw. NOT-STOP des beweglichen Verbrauchers durchgeführt werden muß, so ist dies systembedingt nur durch Abschaltung des Primärleiters möglich, wodurch auf dem beweglichen Verbraucher keine Energie für eine Steuerung bzw. Kommunikationseinrichtung mehr zur Verfügung steht, sofern der Verbraucher nicht einen hinreichend großen Energiespeicher aufweist.

Aufgabe der vorliegenden Erfindung ist es, ein gattungsgemäßes System zur kontaktlosen Energieübertragung dahingehend weiterzuentwickeln, daß dem beweglichen Verbraucher über den Primärleiter insbesondere ein NOT-AUS-Signal übermittelbar ist.

Diese Aufgabe wird erfindungsgemäß mit einer Vorrichtung gemäß den Merkmalen des Anspruchs 1 gelöst, wobei die Vorrichtung beim Verbraucher anzuordnen bzw. Bestandteil des Verbrauchers ist. Ferner wird eine Schaltungsanordnung mit den Merkmalen des Anspruchs 7 beansprucht, welche primärseitig dafür sorgt, daß die Frequenz in der Primär-Leiterschleife veränderbar bzw. einstellbar oder einregelbar ist. Ebenso wird ein System zur berührungslosen Energieübertragung mit den Merkmalen des Anspruchs 11 beansprucht. Weitere vorteilhafte Ausgestaltungen der erfindungsgemäßen Vorrichtung, der erfindungsgemäßen Schaltungsanordnung bzw. des erfindungsgemäßen Systems ergeben sich durch die Merkmale der jeweils auf die unabhängigen Ansprüche 1, 7 und 11 rückbezogenen Unteransprüche.

Der dieser Erfindung zugrundeliegende Erfindungsgedanke ermöglicht es vorteilhaft, einen über eine Primär-Leiterschleife induktiv gespeisten insbesondere beweglichen Verbraucher zu steuern, insbesondere Not-Auszuschalten, ohne daß der Energiefluß von der Primär-Leiterschleife zum angekoppelten Sekundär-Wicklungssystem des Verbrauchers getrennt wird. Dies ist vorteilhaft immer dann möglich, wenn die optimale Frequenz f₀ zur Energieübertragung nur leicht verstimmt wird. Bei einer von f₀ abweichenden Frequenz f kann zwar nicht mehr die volle Leistung zu den entlang der Primär-Leiterschleife angeordneten Verbrauchern übertragen werden, doch genügt diese noch übertragene Leistung in der Regel aus, daß die Steuer- und Regeleinrichtungen der Verbraucher noch funktionstüchtig sind bzw. weiter arbeiten. Die Verbraucher weisen eine Einrichtung zur Ermittlung der Frequenz der induzierten Spannung im Sekundär-Wicklungssystem auf. Die Frequenz kann alternativ jedoch auch von der bereits vorhanden Regelelektronik zur Auskopplung der Energie aus dem Schwingkreis des Sekundär-Wicklungssystems ermittelt werden. Evtl. muß diese hierzu entsprechend erweitert bzw. aufgerüstet werden. Es ist selbstverständlich möglich, nicht nur auf eine sondern auf mehrere voneinander verschiedene Frequenzen f' zu verstimmen bzw. einzuregeln. Jeder von f₀ verschiedenen Frequenz kann dann beispielsweise ein Befehl zugeordnet werden, der nach Erkennung der jeweiligen Frequenz von den Verbrauchern ausgeführt wird. Es ist ebenso möglich, daß jeweils einem Verbraucher eine bestimmte von f₀ verschiedene Frequenz zugeordnet wird. Hierdurch können die einzelnen über die Primär-Leiterschleife gemeinsam gespeisten Verbraucher selektiv gesteuert bzw. in Notfall selektiv NOT-ausgeschaltet werden. Hierbei ist es möglich, daß eine Frequenz f'' vorgesehen ist, bei der alle Verbraucher gleichzeitig im Notfall ausgeschaltet werden.

Das Einstellen bzw. Einregeln der Frequenz für die Primär-Leiterschleife kann vorteilhaft mit bekannten Mitteln erfolgen. In der Regel wird ein steuerbarer bzw. regelbarer Frequenzumsetzer zur Anwendung kommen, der aus einer 50Hz Netzspannung die erforderlichen f₀ sowie die davon abweichenden Frequenzen f' bzw. f" erzeugt.

Das erfindungsgemäße System erfordert keinen großen technischen Aufwand und kommt vorteilhaft ohne zusätzliche teuere Kommunikationsmittel aus.

Nachfolgend wird anhand von Zeichnungen ein mögliches Ausführungsbeispiel eines erfindungsgemäßen Systems sowie dessen einzelnen Komponenten näher erläutert.

Es zeigen:
- Fig. 1:: Ein Blockschaltbild des berührungslosen Energieübertragungssystems;
- Fig. 2:: Ein Blockschaltbild eines möglichen Verbrauchers mit Sekundär-Wicklungssystem nebst nachgeschalteter Elektronik.

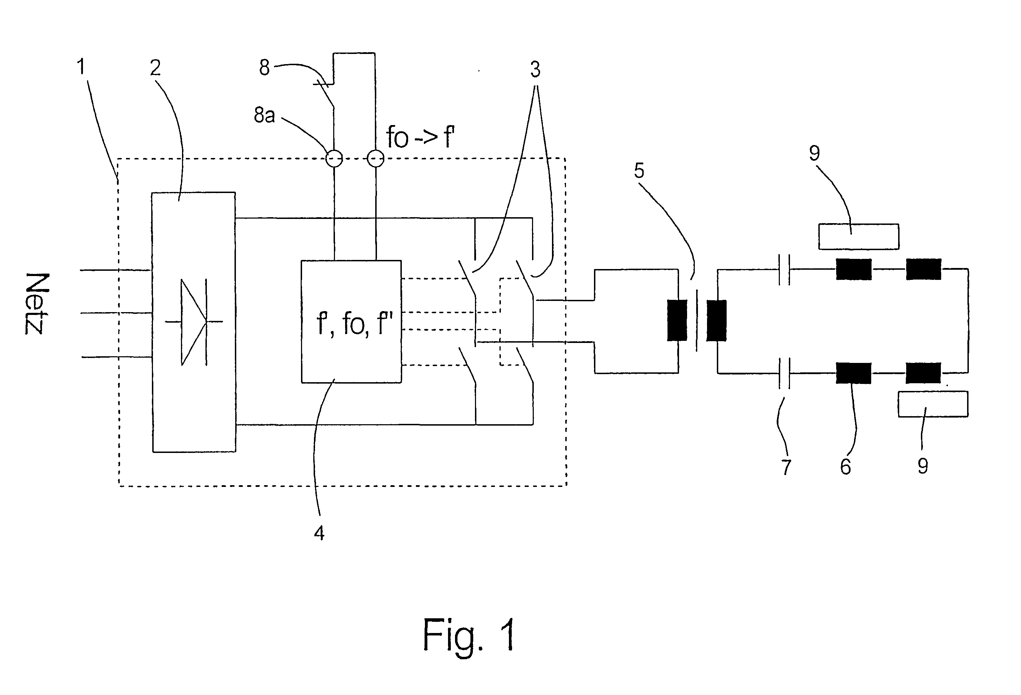

Die Fig. 1 zeigt ein Blockschaltbild des erfindungsgemäßen berührungslosen Energieübertragungssystems. Bis auf die einzelnen Verbraucher bzw. Sekundäreinheiten 9 gehören alle in Fig. 1 dargestellten Komponenten zur Primärseite des Systems. Der Inverter 1 besteht in der Regel aus einem Gleichspannungszwischenkreis, der über einen Gleichrichter 2 vom versorgenden Netz gespeist wird. Der einphasige Ausgang wird mittels Halbleiterschalter 3 so geschaltet, das im Primärleiter ein Strom mit einer Frequenz f₀ fließt. Die Grundfrequenz f₀ und die sich daraus ergebende Schaltfolge der Schalter 3 wird mittels einer Kontroll- und Regeleinheit 4 im Inverter 1 erzeugt. Der exakte Wert von f₀ ist systemspezifisch festgelegt und beträgt in der Regel ca. 20 kHz.

Die Kontroll- und Regeleinheit 4 hat einen Signaleingang 8a über den ein Eingangssignal, z.B. mittels eines NOT-AUS-Schalters 8 der Einheit 4 mitgeteilt werden kann. Wird beispielsweise der NOT-AUS-Schalter 8 geschlossen, so steuert die Kontroll- und Regeleinheit die Schalter 3 in der Weise an, daß sich in der Primär-Leiterschleife eine von f₀ verschiedene Frequenz f' einstellt, wodurch die Verbraucher den NOT-AUS-Zustand erkennen und ausgeschaltet werden.

Der Primärleiter wird als ein System bestehend aus verschiedenen Teilinduktivitäten 6 betrachtet. Mit Hilfe von Streckenkompensationen 7 in Form von Kondensatoren ist der Primärleiterkreis bzw. die Primär-Leiterschleife auf die Betriebsfrequenz f₀ abgeglichen. Damit kann in diesem Schwingkreis ausreichend Strom fließen, um die Sekundäreinheiten bzw. die Verbraucher 9 entlang der Strecke mit Energie zu versorgen.

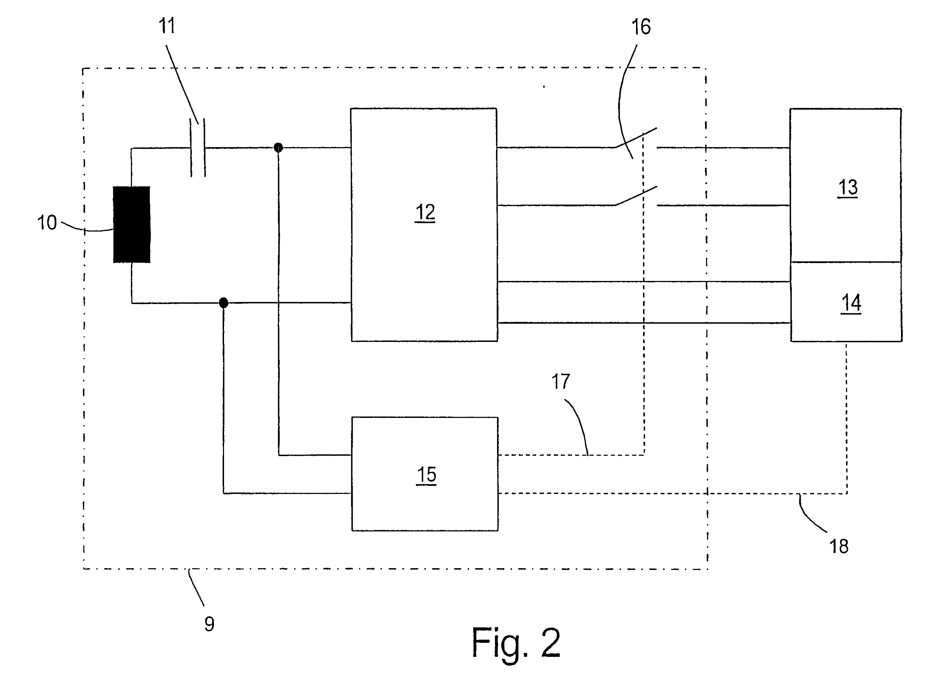

Die Sekundäreinheiten 9 bestehen, wie in Fig. 2 dargestellt, aus Spulen 10, die ebenfalls mittels einer Sekundärkompensation in Form von Kondensatoren 11 auf die Betriebsfrequenz f₀ abgestimmt sind. Die von diesem Schwingkreis abgegebene Energie wird in einer Regelelektronik auf für den Endverbraucher nutzbare Niveaus von Strom und Spannung aufbereitet. In der Regel wird dabei zwischen Energie für den Leistungskreis 13, wie z.B. Antriebe, etc. und Energie für die Steuerung und Kommunikation 14 unterschieden. Zum Ein- und Ausschalten des Energiekreises wird im Ausgang der Sekundäreinheit ein Leistungsrelais 16 eingebracht. Das Relais 16 wird von einer Einrichtung 15 angesteuert, welches kontinuierlich die Frequenz des Stromes bzw. der Spannung im Sekundärschwingkreis überwacht. Hierzu weist die Einrichtung 15 nicht näher dargestellte Meßeinheiten auf. Diese können in digitaler oder analoger Technik ausgeführt sein. So ist es z.B. möglich, geeignete Schwingkreis zu verwenden, die auf von f₀ verschiedene Frequenzen abgestimmt sind. Diese Meßeinrichtung erzeugen bei Erkennung einer bestimmten Frequenz bzw. einer zu großen Frequenzabweichung von der Frequenz f₀ ein Signal, welches zur Ansteuerung des Relais verwendet wird. Es ist selbstverständlich möglich, daß dieses Signal, wie in Fig. 2 dargestellt ebenfalls oder ausschließlich einer Steuereinheit 14 des Verbrauchers zugeführt wird. In diesem Fall kann auch die Steuereinheit 14 zur Ansteuerung des Relais 16 verwendet werden.

Sofern das System lediglich für die NOT-AUS-Schaltung verwendet wird, das heißt, daß nur ein Befehl über die Frequenzverstimmung an die Sekundäreinheiten 9 bzw. die Verbraucher übertragen werden soll, kann zur erhöhten Sicherheit ein Ansteuersignal 17 von der Einrichtung 15 solange erzeugt werden, bis eine von f₀ verschiedene Frequenz ermittelt wird. Im letzteren Fall schaltet das Leistungsrelais ab und der Leistungskreis 13 ist von der Energieversorgung abgetrennt.

Über die Steuerleitung 18 kann der Status des Relais 16 an die Steuereinheit 14 weitergeleitet werden.

Es versteht sich von selbst, daß das vorbeschriebene Ausführungsbeispiel lediglich eine mögliche Realisierung des Erfindungsgedanken ist. So ist es möglich, das die Einrichtungen 15 mehrere Frequenzen erkennen können und jeweils ein zur Frequenz gehöriges Signal aussenden. Sofern die Grundfrequenz f₀ 20 kHz beträgt, ist es z.B. möglich mittels der folgenden beispielhaft aufgeführten Frequenzen f' bzw. f'' von 19,8 kHz, 19,9 kHz, 20,1 kHz oder 20,2 kHz unterschiedliche Kommandos bzw. Befehle zu übermitteln. Hierdurch kann das System auf unterschiedlichste Notsituationen mit verschiedenen insbesondere abgestuften Gegenmaßnahmen reagieren.

Für die Erfindung ist es nicht relevant, ob der Sekundärkreis als Parallel- oder Serienschwingkreis ausgeführt ist. Prinzipiell ist die Erfindung für alle bekannten berührungslosen Energieübertragungssystem einsetzbar.

## Patentansprüche

1. Vorrichtung, sekundärseitig anordbar, die über ein Sekundär-Wicklungssystem von einer Primär-Leiterschleife kontaktlos elektrische Energie erhält, **dadurch gekennzeichnet, daß** die Vorrichtung eine Einrichtung zur Ermittlung der Frequenz der in dem Sekundär-Wicklungssystem induzierten Spannung hat, wobei die Einrichtung nach Ermittlung einer von einer Resonanzfrequenz f₀ abweichenden Frequenz f' ein Signal an eine nachgeordnete Steuer- oder Regeleinrichtung aussendet oder direkt Schaltmittel ansteuert bzw. schaltet.

2. Vorrichtung nach Anspruch 1, **dadurch gekennzeichnet, daß** die Vorrichtung eine Regelelektronik hat, die elektrische Energie aus dem Sekundär-Wicklungssystem für einen Verbraucher auskoppelt, wobei die elektrische Verbindung zwischen Regelelektronik und Verbraucher nach Ermittlung einer bestimmten Frequenz, insbesondere der Frequenz f' unterbrochen wird.

3. Vorrichtung nach Anspruch 2, **dadurch gekennzeichnet, daß** die Steuer- oder Regeleinrichtung oder die Einrichtung zur Ermittlung der Frequenz die Schaltmittel zu Unterbrechung der Energieversorgung des Verbrauchers ansteuern.

4. Vorrichtung nach Anspruch 2 oder 3, **dadurch gekennzeichnet, daß** die Einrichtung zur Ermittlung der Frequenz Bestandteil der Regelelektronik ist.

5. Vorrichtung nach einem der Ansprüche 1 bis 4, **dadurch gekennzeichnet, daß** die Vorrichtung Bestandteil insbesondere eines beweglichen Verbrauchers ist oder durch diesen selbst gebildet ist.

6. Vorrichtung nach einem der Ansprüche 1 bis 5, **dadurch gekennzeichnet, daß** verschiedenen Frequenzen unterschiedliche Befehle zugeordnet oder zuordbar sind, wobei je nach ermittelter Frequenz der entsprechende Befehl von der Vorrichtung oder einer nachgeschalteten Elektronik ausgeführt wird.

7. Schaltungsanordnung, primärseitig anordbar, zur Erzeugung eines konstanten Stroms mit einer Frequenz f oder einer konstanten Spannung mit einer Frequenz f für eine Primär-Leiterschleife eines Systems zur kontaktlosen Energieübertragung, welches bei einer Frequenz f₀ einen optimalen Wirkungsgrad aufweist, wobei die Frequenz f veränderbar ist, **dadurch gekennzeichnet, daß** die Schaltungsanordnung einen Eingang für ein Eingangssignal, insbesondere für ein NOT-AUS-Signal hat, und daß in Abhängigkeit des Eingangssignals die Schaltungsanordnung eine von der Frequenz f₀ verschiedene Frequenz f' oder die Frequenz f₀ erzeugt und in die Primär-Leiterschleife einspeist.

8. Schaltungsanordnung nach Anspruch 7, **dadurch gekennzeichnet, daß** bei Anliegen eines NOT-AUS-Signals die Schaltungsanordnung eine von der Frequenz f₀ verschiedene Frequenz erzeugt.

9. Schaltungsanordnung nach einem der Ansprüche 7 oder 8, **dadurch gekennzeichnet, daß** die Schaltungsanordnung einen Frequenzumrichter aufweist oder diesen ansteuert.

10. Schaltungsanordnung nach einem der Ansprüche 7 bis 9, **dadurch gekennzeichnet, daß** mehreren verschiedenen Eingangssignalen E₁, E₂...Eₙ verschiedene Frequenzen f₁, f₂ ... fₙ zugeordnet sind, die von der Schaltungsanordnung bei anliegen des jeweiligen Signals eingestellt bzw. eingeregelt werden.

11. System zur kontaktlosen Energieübertragung von einer Primärseite auf mindestens einen sekundärseitig angeordneten Verbraucher, wobei jeder Verbraucher ein induktiv mit einer Primär-Leiterschleife der Primärseite gekoppeltes Sekundär-Wicklungssystem hat, und die Primärseite eine Schaltungsanordnung zur Erzeugung eines konstanten Stroms mit einer Frequenz f oder einer konstanten Spannung mit einer Frequenz f hat, wobei die Primär-Leiterschleife und das Sekundär-Wicklungssystem auf eine Frequenz f₀ abgestimmt oder mittels einer Einrichtung aufeinander abstimmbar sind, wobei die Schaltungsanordnung eine Einrichtung zur Einstellung der Frequenz f aufweist, **dadurch gekennzeichnet, daß** die Schaltungsanordnung der Primärseite einen Signaleingang für ein Signal, insbesondere für ein NOT-AUS-Signal hat, und daß bei Anliegen eines Signals die Schaltungsanordnung eine von der Frequenz f₀ verschiedene Frequenz f' erzeugt und in die Primär-Leiterschleife einspeist und der Verbraucher eine Einrichtung zur Ermittlung der Frequenz (f₀,f') der induzierten Spannung im Sekundär-Wicklungssystem aufweist, wobei die Einrichtung selbst in Abhängigkeit der ermittelten Frequenz elektrische Schaltmittel ansteuert oder eine Steuer- und/oder Regeleinrichtung des Verbrauchers über die eingestellte Frequenz f steuerbar ist.

12. System nach Anspruch 11, **dadurch gekennzeichnet, daß** das Sekundär-Wicklungssystem des Verbrauchers mit einer Regelelektronik zur Auskopplung von elektrischer Energie verbunden ist, wobei die Regelelektronik die Frequenz der induzierten Spannung fortlaufend oder in vorbestimmten oder vorbestimmbaren Zeitintervallen im Sekundär-Wicklungssystem ermittelt.

13. System nach einem der Ansprüche 11 bis 12, **dadurch gekennzeichnet, daß** die von f₀ verschiedenen Frequenzen in einem Frequenzbereich liegen, in dem noch genügend Energie übertragen wird, so daß die Einrichtung zur Ermittlung der Frequenz und/oder eine nachgeschaltete Steuer- bzw. Regelelektronik eines Verbrauchers noch funktionstüchtig ist.

## Claims

1. Device, capable of being installed on the secondary side, which contactlessly receives electricity via a secondary winding system from a primary conductor loop, **characterized in that** the device has a means for determining the frequency of the induced voltage in the secondary winding system, wherein the device after determining a frequency f' deviating from a resonant frequency f₀ sends a signal to a subordinate control or adjusting device or directly actuates and/or switches means of control.

2. Device according to Claim 1, **characterized in that** said device has an electronic control, which uncouples electrical power from the secondary winding system for a consumer, the electrical connection between electronic control and consumer being interrupted after a certain frequency, in particular the frequency f', is determined.

3. Device according to Claim 2, **characterized in that** the control or adjusting device or the means for determining the frequency actuates the means of control in order to interrupt the power supply of the consumer.

4. Device according to either one of Claims 2 or 3, **characterized in that** the means for determining the frequency is a component of the electronic control.

5. Device according to any one of Claims 1 to 4, **characterized in that** the mechanism is a component in particular of a mobile consumer or is formed by this itself.

6. Device according to any one of Claims 1 to 5, **characterized in that** different frequencies are or can be assigned different instructions, whereby in accordance with the determined frequency the corresponding instruction of the device or subordinate electronics is executed.

7. Circuit arrangement, capable of being installed on the primary side, for generating a constant current with a frequency f or a constant voltage with a frequency f for a primary conductor loop of a system for contactless energy transmission, which in the case of a frequency f₀ achieves optimum efficiency, the frequency f being variable, **characterized in that** the circuit arrangement comprises an input for an incoming signal, in particular for an emergency stop signal, and **in that** as a function of the incoming signal the circuit arrangement generates a frequency f' different from the frequency f₀, or the frequency f₀ and feeds this into the primary conductor loop.

8. Circuit arrangement according to Claim 7, **characterized in that** if an emergency stop signal is received the circuit arrangement generates a frequency different from the frequency f₀.

9. Circuit arrangement according to either one of Claims 7 or 8, **characterized in that** the circuit arrangement has a frequency converter or actuates this.

10. Circuit arrangement according to any one of Claims 7 to 9, **characterized in that** a plurality of different input signals E₁, E₂... Eₙ are assigned different frequencies f₁, f₂... fₙ, which are set or adjusted by the circuit arrangement when the particular signal is received.

11. System for the contactless energy transmission from a primary winding to at least one consumer arranged on the secondary side, each consumer having a secondary winding system that is inductively coupled to a primary conductor loop of the primary side, and the primary winding having a circuit arrangement for generating a constant current with a frequency f or a constant voltage with a frequency f, wherein the primary conductor loop and the secondary winding system can be tuned to a frequency f₀ or can be tuned to one another by means of a device, the circuit arrangement comprising a device for setting the frequency f, **characterized in that** the circuit arrangement of the primary side has an input for a signal, in particular for an emergency stop signal, and **in that** if a signal is received the circuit arrangement generates a frequency f' different from the frequency f₀ and feeds this into the primary conductor loop, the consumer having a device for determining the frequency (f₀, f') of the induced voltage in the secondary winding system, wherein the device itself controls electric switching means as a function of the determined frequency or a control and/or adjusting device of the consumer can be controlled by means of the set frequency f.

12. System according to Claim 11, **characterized in that** the secondary winding system of the consumer is connected to an electronic control for uncoupling electrical power, the electronic control continuously determining the frequency of the induced voltage in the secondary winding system or at pre-defined or pre-definable intervals.

13. System according to either one of Claims 11 or 12, **characterized in that** the frequencies different from f₀ lie in a frequency spectrum, in which sufficient energy is still transmitted, so that the device for determining the frequency and/or a subordinate control or adjusting device of a consumer are still functional.

## Revendications

1. Dispositif, pouvant être disposé côté secondaire, qui reçoit sans contact de l'énergie électrique d'un circuit fermé primaire, par l'intermédiaire d'un système d'enroulement secondaire, **caractérisé en ce que** le dispositif possède un dispositif pour déterminer la fréquence de la tension induite dans le système d'enroulement secondaire, ce dispositif, après détermination d'une fréquence (f') différente d'une fréquence de résonance (f₀), délivrant un signal à un dispositif de commande ou de régulation aval ou commandant ou commutant directement des moyens de commutation.

2. Dispositif selon la revendication 1, **caractérisé en ce que** le dispositif comporte une électronique de régulation qui prélève de l'énergie électrique du système d'enroulement secondaire pour un récepteur, la liaison électrique entre l'électronique de régulation et le récepteur étant interrompue après détermination d'une fréquence déterminée, en particulier de la fréquence (f').

3. Dispositif selon la revendication 2, **caractérisé en ce que** le dispositif de commande ou de régulation ou le dispositif de détermination de la fréquence commande les moyens de commutation pour interrompre l'alimentation en énergie du récepteur.

4. Dispositif selon la revendication 2 ou 3, **caractérisé en ce que** le dispositif de détermination de la fréquence fait partie intégrante de l'électronique de régulation,

5. Dispositif selon l'une des revendications 1 à 4, **caractérisé en ce que** le dispositif fait partie intégrante en particulier d'un récepteur mobile ou est formé par celui-ci lui-même.

6. Dispositif selon l'une des revendications 1 à 5, **caractérisé en ce que** différentes instructions sont associées ou peuvent être associées à différentes fréquences, l'instruction correspondante étant exécutée, suivant la fréquence déterminée, par le dispositif ou par une électronique couplée en aval.

7. Circuit, pouvant être disposé côté primaire, pour produire un courant constant à une fréquence (f), ou une tension constante à une fréquence (f) pour un circuit fermé primaire d'un système de transmission d'énergie sans contact, lequel présente un rendement optimal à une fréquence (f₀), la fréquence (f) étant variable, **caractérisé en ce que** le circuit comporte une entrée pour un signal d'entrée, en particulier pour un signal d'arrêt d'urgence, et **en ce qu'**en fonction du signal d'entrée le circuit produit une fréquence (f') différente de la fréquence (f₀) ou la fréquence (f₀) et l'envoie dans le circuit fermé primaire.

8. Circuit selon la revendication 7, **caractérisé en ce que** dans le cas de l'application d'un signal d'arrêt d'urgence, le circuit produit une fréquence différente de la fréquence (f₀).

9. Circuit selon l'une des revendications 7 ou 8, **caractérisé en ce que** le circuit comporte un changeur de fréquence ou commande celui-ci.

10. Circuit selon l'une des revendications 7 à 9, **caractérisé en ce que** différentes fréquences (f₁, f₂...fₙ) sont associées à plusieurs signaux d'entrée différents (E₁, E₂...Eₙ), lesquelles sont réglées ou régulées par le circuit lorsque s'applique le signal respectif.

11. Système de transmission d'énergie sans contact d'un côté primaire à au moins un récepteur disposé côté secondaire, chaque récepteur possédant un système d'enroulement secondaire couplé de manière inductive à un circuit fermé primaire du côté primaire, et le côté primaire possédant un circuit pour produire un courant constant à une fréquence (f) ou une tension constante à une fréquence (f), le circuit fermé primaire et le système d'enroulement secondaire étant accordés sur une fréquence (f₀) ou pouvant être accordés l'un à l'autre au moyen d'un dispositif, le circuit comportant un dispositif de réglage de la fréquence (f), **caractérisé en ce que** le circuit du côté primaire possède une entrée de signaux pour un signal, en particulier un signal d'arrêt d'urgence, et **en ce que** lorsque s'applique un signal le circuit produit une fréquence (f') différente de la fréquence (f₀) et l'envoie dans le circuit fermé primaire, et le récepteur comporte un dispositif de détermination de la fréquence (f₀, f') de la tension induite dans le système d'enroulement secondaire, ce dispositif commandant lui-même des moyens de commutation électriques, en fonction de la fréquence déterminée, ou un dispositif de commande et/ou de régulation du récepteur pouvant être commandé par la fréquence (f) réglée.

12. Système selon la revendication 11, **caractérisé en ce que** le système d'enroulement secondaire du récepteur est relié à une électronique de régulation pour prélever une énergie électrique, l'électronique de régulation déterminant la fréquence de la tension induite, de manière continue ou à intervalles de temps prédéterminés ou pouvant être prédéterminés, dans le système d'enroulement secondaire.

13. Système selon l'une des revendications 11 ou 12, **caractérisé en ce que** les fréquences différentes de (f₀) se situent dans une gamme de fréquences dans laquelle une énergie encore suffisante est transmise, ce qui fait que le dispositif de détermination de la fréquence et/ou une électronique de commande ou électronique de régulation couplée en aval d'un récepteur est encore en état de fonctionner.
